# EUROPÄISCHE PATENTSCHRIFT

(11) **EP 0 840 046 B1**
(45) Veröffentlichungstag und Bekanntmachung des Hinweises auf die Patenterteilung: **10.11.2004**
(21) Anmeldenummer: 97810626.8
(22) Anmeldetag: 02.09.1997
(51) Int. Cl.: F16K 17/06, F16K 17/04

(54) **Direktwirkendes Sicherheitsventil und Hubkolbenbrennkraftmaschine mit Sicherheitsventil**
Direct-acting safety valve, and internal combustion engine provided therewith
Soupape de sécurité à action directe, et moteur à combustion interne incorporant une telle soupape

(30) Priorität: 01.11.1996 EP 96810727
(43) Veröffentlichungstag der Anmeldung: 06.05.1998
(73) Patentinhaber: Wärtsilä Schweiz AG, 8401 Winterthur (CH)
(72) Erfinder: Hofer, Robert, 8353 Elgg (CH)
(74) Vertreter: Sulzer Management AG

(56) Entgegenhaltungen:
- DE-A- 1 800 524

## Beschreibung

Die Erfindung betrifft ein direktwirkendes Sicherheitsventil gemäss dem Oberbegriff des Anspruches 1 und eine Hubkolbenbrennkraftmaschine mit Sicherheitsventil.

Derartige Sicherheitsventile sind bekannt und umfassen ein Ventilgehäuse mit einer Einlass- und Auslassöffnung, einen Ventilsitz, der im Bereich der Einlassöffnung ausgebildet ist, einen Ventilkörper, der mit dem Ventilsitz zusammenwirkt und eine Ventilfeder, welche den Ventilkörper gegen den Ventilsitz vorspannt.

Bei hohem Mediumdruck wird daher eine grössere Sitzfläche vorgesehen, um im drucklosem Zustand eine Beschädigung der Sitzfläche infolge der Federvorspannung auszuschliessen.

DE-A-1800524 beschreibt ein Sicherheitsventil nach dem Oberbegriff von Anspruch 1.

Bekanntlich ist der Oeffnungs- und Schliessfehler eines direktwirkendes Sicherheitsventils vom Verhältnis Sitzfläche zu Druckbeaufschlagungsfläche abhängig, d.h. bei grösserer Sitzfläche treten grössere Fehler auf. Dies ist ein Nachteil. Ein weiterer Nachteil besteht darin, dass die bekannten Sicherheitsventile nach mehrmaligem Abblasen im Regelfall ungenau funktionieren und zwar aufgrund der hohen Aufprallgeschwindigkeit beim Schliessen des Ventils.

Der Erfindung liegt die Aufgabe zugrunde ein direktwirkendes Sicherheitsventil zu schaffen, bei welchem die Nachteile behoben sind und das bei genau definiertem Mediumdruck öffnet und schliesst.

Diese Aufgabe wird erfindungsgemäss mit den kennzeichnenden Merkmalen des Anspruches 1 gelöst.

Aufgrund der druckabhängigen Sitzanpresskraft kann eine kleine Sitzfläche vorgesehen werden, wobei die Differenzkraft F₅ in einem Bereich gehalten wird, derart, dass einerseits eine zu hohe Sitzpressung in jedem Fall vermieden wird und andererseits dauernd eine ausreichende Dichtheit gewährleistet ist. Da die Beaufschlagungsfläche gross gewählt wird, ergibt sich ein kleiner Hub, z.B. 0,1 mm. Dadurch wird die Aufprallgeschwindigkeit des Ventilkörpers beim Schliessvorgang klein. Dies hat die Vorteile, dass das Ventil schnell reagiert und dass eine Sitzüberlastung durch den Ventilteller vermieden wird, so dass das Ventil eine lange Lebensdauer aufweist.

Weil der maximale Ventilhub ca 0,1 mm beträgt, können im Medium enthaltene Partikel grösser 0,1 mm nicht durch das geöffnete Ventil gelangen. Kleinere Partikel, die unter den Ventilsitz gelangen, werden entweder durch die Oeffnung ausgeschwemmt oder beim Schliessen des Ventils zerdrückt, weil eine hohe Schliesskraft vorhanden ist und die Ventilsitzpartien mit Vorteil gehärtet sind. Aufgrund des kleinen Ventilhubes ist das Ventil schmutzunempfindlich.

Es ist von Vorteil, wenn die Wandungen des Rohres und des Mittelteiles im wesentlichen gleich lang sind, wenn der Raum zwischen dem Rohr und dem Mittelteil ein ringförmiger Spalt ist und wenn ein Medium zur Wärmeübertragung in dem Spalt angeordnet ist, sodass die Temperatur des Mittelteiles und des Rohres sowie deren Längenausdehnung gleich sind, wird eine überhöhte Sitzpressung vermieden. Hierzu kann mindestens der Mittelteil an der Aussenseite eine Isolierschicht aufweisen. Der Ventilkörper wird mittels einer Membran im Ventilgehäuse exakt konzentrisch gehalten und dadurch eine mit Medium beaufschlagbare Kammer gebildet werden.

Bei einer bevorzugten Ausführungsform ist der Hohlkörper mehrteilig ausgebildet. Dadurch, dass die Teile des Hohlkörpers an den membranartigen Abschnitt mittels Schrauben unter Abdichtung der mit Druckmedium zu beaufschlagenden Kammer miteinander verbunden sind, wird die Längenausdehnung des Hohlkörpers grösser mit dem Vorteil, dass die Baulänge des Ventils kurz ausfällt.

Es ist von Vorteil, wenn ein Rückschlagventil im Bereich des Einlasses angeordnet ist, weil dadurch die einwandfreie Funktion desselben gewährleistet ist. Dadurch kann das Volumen des für die Aufnahme des zu entlastenden Mediums extrem klein gemacht werden, so dass bei Druckpulsationen eine geringe Erwärmung auftritt, was sich günstig auf den Oeffnungsdruck des Sicherheitsventils auswirkt.

Da die mit dem Medium beaufschlagbare Kammer gegenüber dem restlichen Ventilgehäuse hermetisch abgeschlossen ist, d.h. keine Spalten mit Medium gefüllt werden wird in vorteilhafter Weise das Ventil nicht durch eingetrocknetes Medium blockiert werden.

Aufgrund der druckabhängigen Sitzanpresskraft eignet sich das Ventil insbesondere für hohe Mediumdrücke. Das Sicherheitsventil eignet sich insbesondere aber nicht ausschliesslich für Hubkolbenbrennkraftmaschinen.

Nachfolgend wird die Erfindung anhand der beiliegenden Zeichnungen erläutert.

Es zeigen:
- Fig. 1: Einen Längsschnitt einer Ausführungsform eines erfindungsgemässen direktwirkenden Sicherheitsventils;
- Fig. 2: ein Diagramm des Kraftverlaufes in Abhängigkeit von Mediumdruck;
- Fig. 3: ein Diagramm des Kraftverlaufes am Ventilsitz in Abhängigkeit des Mediumdrucks;
- Fig. 4 bis 5: Ausführungsformen des Hohlkörpers;
- Fig. 6: einen Längsschnitt einer zweiten Ausführungsform eines direktwirkenden Sicherheitsventils;
- Fig. 7: eine Draufsicht auf einen im Hohlkörper vorgesehenen Stützring;
- Fig. 8: eine Draufsicht auf im Hohlkörper vorgesehene Gewindeteile und
- Fig. 9: eine Einzelheit "A" in Fig. 6 im grösseren Massstab.

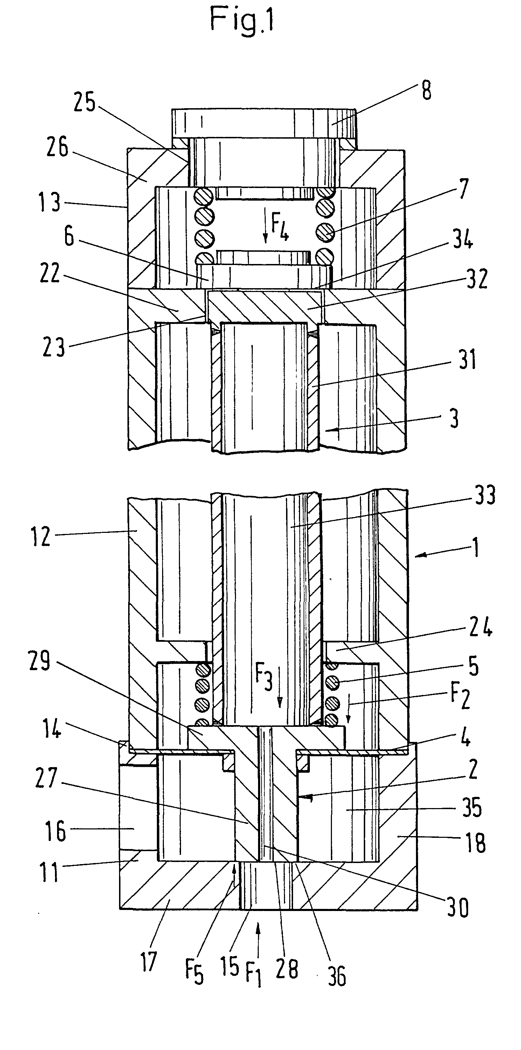

Wie die Figur 1 zeigt, besteht das Sicherheitsventil im wesentlichen aus einem Ventilgehäuse 1, einem Ventilkörper 2, einem Hohlkörper 3, einer Membrane 4, einer Ventilfeder 5, einem Auflageorgan 6, einer zweiten Ventilfeder 7 und einem Stellorgan 8. Das Ventilgehäuse 1 ist zylinderförmig ausgebildet und enthält einen Anschlussteil 11, einen Mittelteil 12 und einen Abschlussteil 13. Der Anschlussteil 11 ist becherförmig ausgebildet und am offenen Ende ist eine Schulter 14 ausgebildet. Der Anschlussteil 11 weist eine Einlassöffnung 15 und eine Auslassöffnung 16 für das Medium auf, wobei die Einlassöffnung im Zentrum des Bodens 17 und die Auslassöffnung in der Wandung 18 ausgebildet ist. Der Mittelteil 12 ist an einer Stirnseite offen und an der anderen Stirnseite teilweise durch eine Wandung 22 mit einer zentrischen Bohrung 23 abgeschlossen. Ferner weist der Mittelteil einen nach innengerichteten, ringförmigen Abschnitt 24 auf. Der Abschlussteil 13 ist becherförmig ausgebildet und hat eine Gewindebohrung 25 im Boden 26. Der Ventilkörper 2 weist einen zylindrischen ersten Abschnitt 27, dessen Stirnfläche einen Ventilteller 28 bildet und einen zweiten Abschnitt mit einem Flansch 29 auf, dessen Stirnfläche den Hohlkörper 3 abschliesst. Ferner hat der Ventilkörper 2 eine axiale Durchbohrung 30. Der Hohlkörper 3 besteht aus einem Rohr 31, dessen Wandstärke wesentlich dünner ist als die Wandstärke des Mittelteiles 12 und einem Abschlussteil 32, welcher das Rohr 31 an einem Ende abschliesst. Das andere Ende des Rohres 31 ist mit dem Ventilkörper 2 verbunden, sodass eine Absperreinheit mit einer Kammer 33 gebildet wird, die mit Medium beaufschlagbar ist.

Diese Absperreinheit ist im Ventilgehäuse 1 so angeordnet, dass der Ventilkörper 2 mit der Stirnfläche 28 die Einlassöffnung 15 schliesst und der Hohlkörper 3 in die Bohrung 23 ragt. Zwischen dem Anschlussteil 11 und dem Mittelteil 12 ist die Membrane 4 angeordnet, welche die Absperreinheit mit dem Ventilgehäuse 1 verbindet und eine mit Medium beaufschlagbare Kammer 35 bildet. Die Ventilfeder 5 ist zwischen dem ringförmigen Abschnitt 24 und dem Flansch 29 angeordnet und presst den Ventilkörper 2 gegen einen Ventilsitz 36, der im Bereich der Einlassöffnung 15 an der Innenseite des Anschlussteiles 11 ausgebildet ist. Im Abschlussteil 13 des Ventilgehäuses 1 sind das Auflageorgan 6, die zweite Ventilfeder 7 und das Stellorgan 8 angeordnet, wobei das Auflageorgan 6 an der Wandung 22 des Gehäusemittelteils 12 anliegt. Die Absperreinheit ist in der Längserstreckung so bemessen, dass zwischen dem Auflageorgan 6 und dem Hohlkörper 3 ein Abstand vorhanden ist.

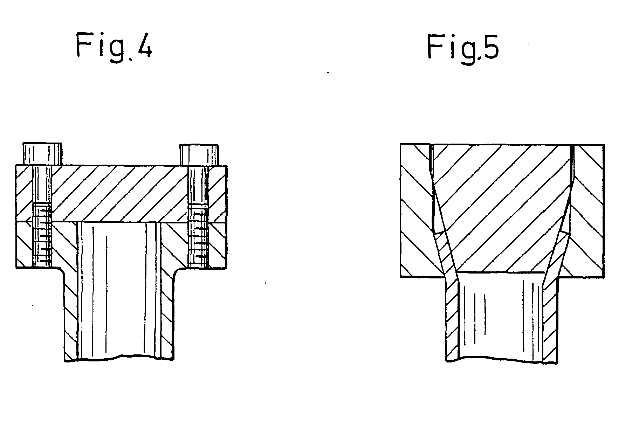

Die Figuren 4 und 5 zeigen Ausführungsform für den Abschluss des Hohlkörpers.

Nachfolgend wird die Funktionsweise des direktwirkenden Sicherheitsventils mit Bezug auf die Figuren 1 bis 3 beschrieben.

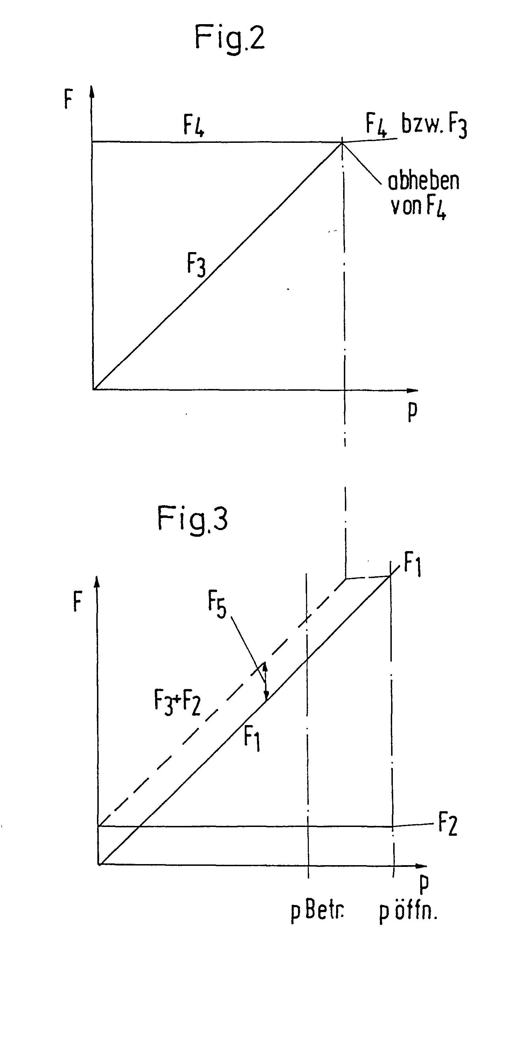

Die Ventilfeder 5 erzeugt eine Schliesskraft F₂, die vom Mediumdruck unabhängig ist und die zweite Feder 7 erzeugt eine Schliesskraft F₄, welche zusammen mit der Schliesskraft F₂ dem Sollansprechdruck entspricht. Während des Betriebes wirkt eine Kraft F₁ auf den Ventilteller 28, welche dem Produkt aus Mediumdruck und Grösse der Fläche 28 entspricht. Da das Medium auch in die Kammer 33 strömt, wird mit steigenden Innendruck F₃ das dünnwandige Rohr 31 im Sinne einer Verlängerung verformt. Diese Verlängerung wird nachdem der Spalt 34 aufgehoben ist, durch das relative dickwandige Ventilgehäuse 1 eingeschränkt. Mit zunehmender Einschränkung der Verformung des Rohres steigt die Kraft F₃ in axialer Richtung an und somit wird eine vom Mediumdruck abhängige Sitzanpresskraft F₂ + F₃ erzeugt (Figur 2). Dieser Sitzanpresskraft F₂ + F₃ wirkt eine Kraft F₁ aus dem Mediumdruck multipliziert mit der Fläche des Ventiltellers 28 entgegen. Durch entsprechende Auswahl der Rohrwanddicke wird der Verlauf der Kraft F₃ so festgelegt, dass dieser im wesentlichen parallel zum Verlauf der Kraft F₁ verläuft (Figur 3). Dadurch bleibt die Sitzpressung F₅, welche die Differenz der Kraftsumme F₂ und F₃ minus der Kraft F₁ entspricht, über den Betriebsdruck des Ventils hinaus im wesentlichen konstant, so dass über den ganzen Bereich des Mediumdruckes das Ventil einwandfrei dicht bleibt. Damit wird in vorteilhafter Weise erreicht, dass bei im System oberhalb des Nenndruckes auftretenden Druckschwingungen die Dichtheit des Ventils aufrechterhalten bleibt. Dadurch wird verhindert, dass bei zu geringer Sitzpressung das Ventil mit der Zeit undicht wird und zwar aufgrund einer Erosion am Ventilsitz durch ständig austretendes Medium. Erreicht der Mediumdruck den Sollanspruchdruck, so entspricht die Kraft F₃ im dünnwandigen Rohr 31 der von der Feder 7 erzeugten Kraft F₄, wobei der Hohlkörper 3 mit dem Abschlussorgan 32 das Auflageorgan 6 abhebt. Steigt der Mediumdruck weiter an, wird die Kraft F₁ grösser als die Kraft F₄ der zweiten Feder 7. Dadurch wird die zweite Feder rasch zusammengedrückt, weil die Steifigkeit der Feder 7 viel kleiner ist als die Steifigkeit des Rohres 31 und das Auflageorgan 6 wird von der als Anschlag dienenden Wandung 22 des Mittelteiles 12 des Ventilgehäuses 1 abgehoben und das Ventil beginnt abzublasen. In diesem Fall verhält sich das vorher axial steife dickwandige Gehäuse weicher als das dünnwandige Rohr 31.

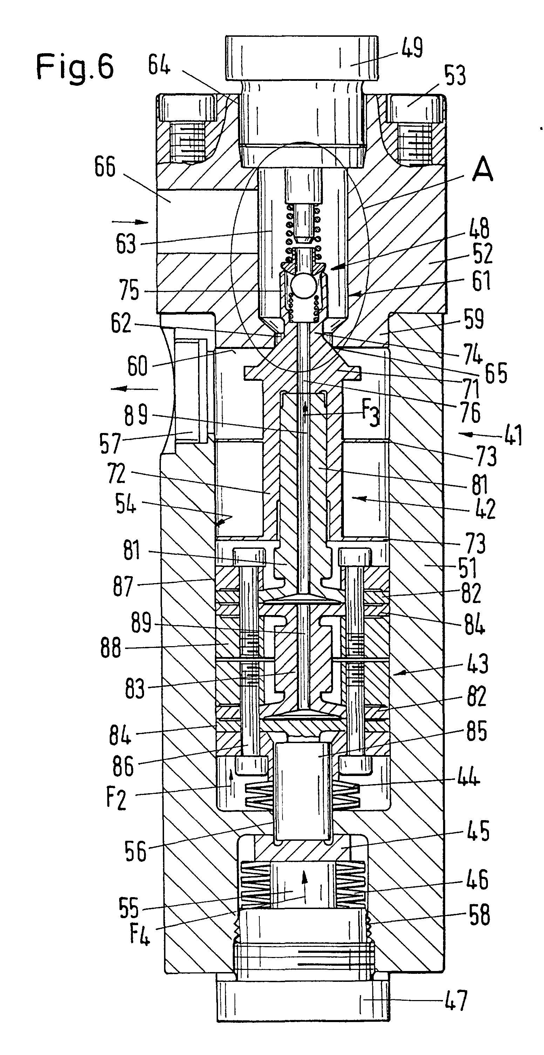

Die Fig. 6 zeigt eine bevorzugte Ausführungsform eines Sicherheitsventils in der Einbaulage. Wie die Fig. 6 zeigt, besteht das Sicherheitsventil im wesentlichen aus einem Ventilgehäuse 41, einem Ventilkörper 42, einem Hohlkörper 43, einer ersten Ventilfeder 44, einem Auflageorgan 45, einer zweiten Ventilfeder 46, einem Stellorgan 47, einem Rückschlagventil 48 und einem Stopfen 49. Das Ventilgehäuse 41 umfasst einen Unterteil 51 und einen Oberteil 52, die mittels Schrauben 53 verbunden sind. Im Oberteil 51 ist eine erste zylindrische Ausnehmung 54 eine zweite zylindrische Ausnehmung 55 und ein zylindrischer Kanal 56 ausgebildet, welcher die erste und zweite Ausnehmung verbindet. Die Ausnehmungen und der Kanal sind auf einer Zentrumsachse (nicht dargestellt) liegend angeordnet. In der Wandung des Unterteiles 51 ist im Bereich des Ueberganges zum Oberteil 52 eine radiale Oeffnung 57 ausgebildet, welche die Abblasöffnung darstellt. In der Wandung der zweiten Ausnehmung ist an der Stirnseite ein Innengewindeabschnitt 58 ausgebildet. Der Oberteil 52 weist einen Ansatz 59 auf, der in die erste Ausnehmung 54 des Unterteiles 51 hineinragt, um den Ober- und Unterteil zu zentrieren und dessen freie Fläche 60 die erste Ausnehmung 54 abschliesst. Im Oberteil 52 ist eine dritte Ausnehmung 61 ausgebildet, die drei Abschnitte 62, 63, 64 umfasst. Der erste Abschnitt 62 mündet in die freie Fläche 60 des Ansatzes 59, wobei die dadurch gebildete Kante einen Ventilsitz 65 bildet. Der zweite Abschnitt 63 hat eine gegenüber dem ersten Abschnitt einen grösseren Innendurchmesser und ist angrenzend an den ersten Abschnitt ausgebildet. In der Wandlung des zweiten Abschnittes ist eine radiale Bohrung ausgebildet, welche einen Ventileinlass 66 bildet. Der dritte Abschnitt 64 ist mit einem Innengewinde versehen.

Der Ventilkörper 42 ist im wesentlichen zylindrisch ausgebildet und weist einen konischen Ansatz 71 auf, der mit dem Ventilsitz 65 in und ausser Kontakt bringbar ist. Unterhalb des konischen Ansatzes 71 ist ein hohlzylindrischer Abschnitt 72 mit zwei radial abstehenden, membranartigen Abschnitte 73 ausgebildet, die zwei abgeschlossene Kammern bilden und den Ventilkörper bezüglich dem Ventilsitz zentrieren. Es wird darauf hingewiesen, dass anstelle des scheibenförmigen Abschnittes zwei Membranen verwendet werden können, welche mittels geeigneter Mittel am Ansatz befestigt ist. Oberhalb des konischen Ansatzes 71 ist angrenzend an diesen ein zylindrischer Abschnitt 74 und daran anschliessend ein hohlzylindrischer Abschnitt 75 ausgebildet. Im Ventilkörper 42 ist eine Bohrung 76 ausgebildet, welche die Ausnehmung im hohlzylindrischen Abschnitt 72 mit dem hohlzylindrischen Abschnitt 75 verbindet.

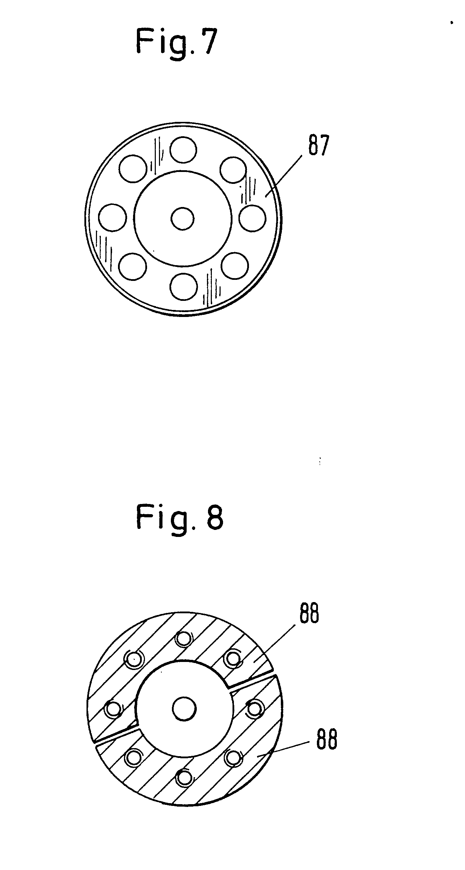

Der Hohlkörper 43 ist mehrteilig ausgebildet und besteht aus einem Anschlussteil 81, der in den hohlzylindrischen Abschnitt 72 des Ventilkörpers 42 unter Abdichtung angeordnet ist und einen scheibenförmigen, membranartigen Abschnitt 82 aufweist, einem Mittelteil 83, der an seinen Enden jeweils membranartige Abschnitte 82, 84 aufweist und einem Abschlussteil 85, der an einem Ende einen membranartigen Abschnitt 84 aufweist. Die membranartigen Abschnitte sind so ausgebildet, dass zwischen zwei gegenüberliegenden Flächen ein Raum vorhanden ist. Dieser Raum wird durch die aneinanderliegenden Randpartien begrenzt. Die Teile 81, 82, 85 sind mittels Schrauben 86 sowie Lochscheiben 87 und Gewindeteile 88 (Fig. 7, 8) zu einer Baueinheit verbunden. Im Anschlussteil 81 und Mittelteil 83 sind zentrische Bohrungen 89 ausgebildet, die miteinander und der Bohrung 76 im Ventilkörper 42 in Verbindung stehen und einen ersten Raum bilden. Die Bohrung 76 ist auf der Seite des hohlzylindrischen Abschnittes 75 durch das Rückschlagventil 48 abgeschlossen. Der durch die Bohrungen 76 und 89 gebildete erste Raum ist mit einem Medium gefüllt, welches bezüglich dem zu entlastenden Medium eine höhere Dichte oder eine andere Konsistenz aufweist. Als Beispiel handelt es sich beim zu entlastenden Medium um Schweröl, so ist der Hohlraum mit Glyzerin gefüllt. Der Mittelteil 83 als auch abschnittweise der Anschlussteil 81 und Abschlussteil 85 sind am Umfang so ausgestaltet, dass ein zweiter Raum gebildet ist, der mit einem Medium zur Wärmeübertragung gefüllt ist.

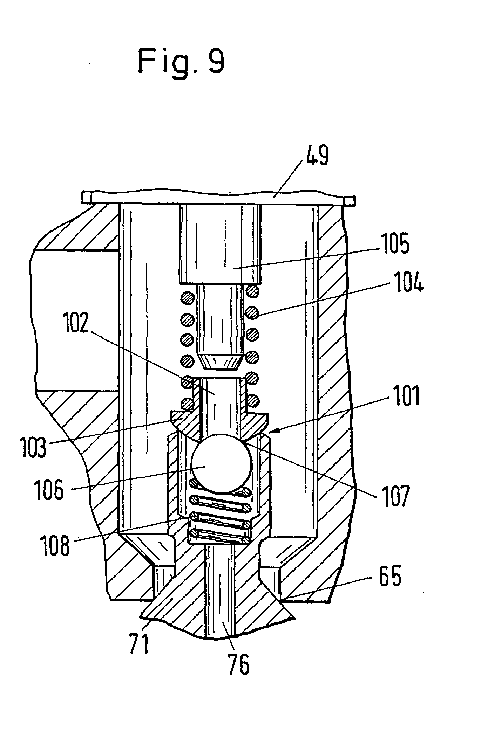

Wie die Fig. 9 zeigt, umfasst das Rückschlagventil 48 einen ersten Ventilsitz 101, der an der Randpartie des hohlzylindrischen Abschnittes 75 am Ventilkörper 42 ausgebildet ist, einen mit einer Durchbohrung 102 versehenen ersten Ventilkörper 103, der mit dem ersten Ventilsitz 101 zusammenwirkt, eine erste Ventilfeder 104, welche den ersten Ventilkörper 103 in der Schliessstellung hält, ein Anschlagorgan 105, auf dem die erste Ventilfeder 104 abgestützt ist und den Hub des ersten Ventilkörpers 103 begrenzt, einen zweiten Ventilkörper 106, der als Kugel ausgebildet ist und mit einem zweiten Ventilsitz 107 zusammenwirkt und eine zweite Ventilfeder 108, die einerseits am Grund des hohlzylinderförmigen Abschnitt 75 am Ventilkörper 42 abgestützt ist und andererseits an der Kugel 107 anliegt.

Dieses Rückschlagventil 48 öffnet in zwei Richtungen und zwar mit steigenden Mediumdruck wird die Kugel 106 von dem Ventilsitz 107 abgehoben und mit sinkenden Druck wird der erste Ventilkörper 103 vom Ventilsitz 101 abgehoben. Mit Bezug auf das vorstehende Beispiel verhindert dieses Rückschlagventil das Austreten von Glyzerin aus dem ersten Raum 76, 89 und beim Abblasen des Schweröls eine Durchmischung von Schweröl und Glyzerin. Das Rückschlagventil 48 ist im Bereich des Einlasses 66 angeordnet, in welchem eine hohe Temperatur herrscht. Dies hat den Vorteil, dass das Ansprechen des Rückschlagventils gewährleistet ist. Bei relativ niedriger Temperatur könnte insbesondere bei Schweröl das Rückschlagventil versagen.

Das direktwirkende Sicherheitsventil enthält ein Ventilgehäuse 1, einen Ventilsitz 36, einen Ventilkörper, eine Ventilfeder 5, um eine vom Mediumdruck unabhängigen Sitzanpresskraft zu erzeugen, einen mit dem Mediumdruck beaufschlagbaren Hohlkörper 3,der mit dem Ventilkörper 2 verbunden ist, um eine vom Mediumdruck abhängige Sitzanpresskraft zu erzeugen und eine zweite Ventilfeder 7, um den Abblasdruck einzustellen.

Aufgrund der vom Mediumdruck erzeugten Sitzanpresskraft kann eine kleine Sitzfläche vorgesehen werden, so dass das Ventil bei genau definierten Mediumdruck betätigt wird.

## Patentansprüche

1. Direktwirkendes Sicherheitsventil, das ein Gehäuse (1, 41) mit einer Einlassöffnung (15, 66) und einer Auslassöffnung (16, 57) für ein Druckmedium, einen Ventilsitz (36, 65), einen Ventilkörper (2, 42) und eine Ventilfeder (5, 44) zur Erzeugung einer vom Mediumdruck unabhängigen Sitzanpresskraft enthält, und mit einer Einrichtung (3, 6, 7, 8; 43, 45, 46, 47), die mit dem Ventilkörper (2, 42) in Wirkverbindung und mit dem Mediumdruck beaufschlagbar ist, um eine vom Mediumdruck abhängige Sitzanpresskraft zu erzeugen und den Mediumdruck zu begrenzen **dadurch gekennzeichnet, dass** die Einrichtung mindestens einen mit Medium beaufschlagbaren Hohlkörper (3, 43), der im Sinne einer Verlängerung elastisch verformbar ist und Mittel (6, 7, 8) aufweist, um den Mediumdruck zu begrenzen.

2. Ventil nach Anspruch 1, **dadurch gekennzeichnet, dass** die Einrichtung innerhalb des Ventilgehäuses (1, 41) angeordnet ist.

3. Ventil nach einem der Ansprüche 1 oder 2, **dadurch gekennzeichnet, dass** das Ventilgehäuse (1) einen starren Mittelteil (12) aufweist.

4. Ventil nach einem der Ansprüche 1 bis 3, **gekennzeichnet durch** mindestens eine Membran (4), welche das Gehäuse (1) mit dem Ventilkörper (2) verbindet und eine mit Medium beaufschlagbare Kammer (35) im Ventilgehäuse (1) ausbildet.

5. Ventil nach einem der Ansprüche 1 bis 4, **dadurch gekennzeichnet, dass** der Hohlkörper (3, 43) zylinderförmig ausgebildet ist und dass der Hohlkörper (3, 43) einerseits durch den Ventilkörper (2, 42) und andererseits durch ein Abschlussorgan (32, 85) begrenzt ist.

6. Ventil nach einem der Ansprüche 1 bis 5, **dadurch gekennzeichnet, dass** der Ventilkörper (2, 42) einen ebenen oder kegelförmigen Sitz bildet und dass der Ventilkörper (2, 42) eine axiale Durchbohrung (30, 76) aufweist, um den Hohlkörper (3, 43) mit Medium zu beaufschlagen.

7. Ventil nach einem der Ansprüche 1 bis 6, **dadurch gekennzeichnet, dass** der Hohlkörper (3) ein dünnwandiges Rohr (31) aufweist, das elastisch verformbar ist.

8. Ventil nach einem der Ansprüche 1 bis 7, **dadurch gekennzeichnet, dass** die Wandung des Rohres (31) und die Wandung des Mittelteiles (12) im wesentlichen die gleiche Länge aufweisen.

9. Ventil nach einem der Ansprüche 1 bis 5, **dadurch gekennzeichnet, dass** der Hohlkörper (43) mehrteilig ausgebildet ist.

10. Ventil nach einem der Ansprüch 1 bis 9, **dadurch gekennzeichnet, dass** der Hohlkörper (3, 43) einen ersten Raum (76, 89) aufweist, der mit der Einlassöffnung (15) in Verbindung steht.

11. Ventil nach Anspruch 10, **dadurch gekennzeichnet, dass** der erste Raum mit einem Medium gefüllt ist, welches sich vom zu entlastenden Medium unterscheidet.

12. Ventil nach einem der Ansprüche 1 bis 11, **gekennzeichnet durch** einen zweiten Raum zur Aufnahme eines Mediums zur Wärmeübertragung.

13. Ventil nach einem der Ansprüche 1 bis 12, **gekennzeichnet durch** ein Rückschlagventil (48), das im Bereich des Einlasses des Mediums angeordnet ist.

14. Anordnung zum Steuern des Mediumdruckes mit einem Sicherheitsventil nach einem der Ansprüche 1 bis 11, **dadurch gekennzeichnet, dass** die Anordnung eine Einspritzanlage oder dgl. ist.

15. Hubkolbenbrennkraftmaschine mit einem Sicherheitsventil nach einem der Ansprüche 1 bis 14.

## Claims

1. Directly acting safety valve which includes a housing (1, 41) with an inlet opening (15, 66) and an outlet opening (16, 57) for a pressure medium, a valve seat (36, 65), a valve body (2, 42) and a valve spring (5, 44) for producing a seating force which is independent of the pressure of the medium, and having a device (3, 6, 7, 8; 43, 45, 46, 47) which is in active contact with the valve body (2, 42) and can be pressurised by the pressure of the medium in order to produce a seating force which is dependent on the pressure of the medium and to limit the pressure of the medium, **characterised in that** the device has at least one hollow body (3, 43) which can be stressed by the medium and can be elastically deformed in the sense of an extension and has means (6, 7, 8) in order to limit the pressure of the medium.

2. Valve in accordance with claim 1, **characterised in that** the device is arranged within the valve housing (1, 41).

3. Valve in accordance with claim 1 or claim 2, **characterised in that** the valve housing (1) has a rigid middle part (12).

4. Valve in accordance with one of the claims 1 to 3, **characterised by** at least one membrane (4), which connects the housing (1) to the valve body (2) and forms a chamber (35) in the valve housing (1) which can be pressurised with medium.

5. Valve in accordance with one of the claims 1 to 4, **characterised in that** the hollow body (3, 43) is of cylinder-like shape and **in that** the hollow body (3, 43) is bounded at the one end by the valve body (2, 42) and at the other end by a closure member (32, 85).

6. Valve in accordance with one of the claims 1 to 5, **characterised**
**in that** the valve body (2, 42) forms a flat or conical seat, and in that the valve body (2, 42) has an axial through-bore (30, 76) in order to pressurise the hollow body (3, 43) with medium.

7. Valve in accordance with one of the claims 1 to 6, **characterised in that** the hollow body (3) has a thin-walled tube (31) which is elastically deformable.

8. Valve in accordance with one of the claims 1 to 7, **characterised in that** the wall of the tube (31) and the wall of the central part (12) have essentially the same length.

9. Valve in accordance with one of the claims 1 to 5, **characterised in that** the hollow body (43) is of multi-part design.

10. Valve in accordance with one of the claims 1 to 9, **characterised in that** the hollow body (3, 43) has a first space (76, 89) which stands in communication with the inlet opening (15).

11. Valve in accordance with claim 10, **characterised in that** the first space is filled with a medium which is different from the medium to be relieved.

12. Valve in accordance with one of the claims 1 to 11, **characterised by** a second space for receiving a medium for heat transfer.

13. Valve in accordance with one of the claims 1 to 12, **characterised by** a non-return valve (48) which is arranged in the region of the inlet of the medium.

14. Arrangement for controlling the medium pressure with a safety valve in accordance with one of the claims 1 to 11, **characterised in that** the arrangement is an injection system or the like.

15. Reciprocating piston combustion engine comprising a safety valve in accordance with one of the claims 1 to 14.

## Revendications

1. Soupape de sécurité à action directe, qui comporte une cage (1, 41) avec une ouverture d'admission (15, 66) et une ouverture d'évacuation (16, 57) pour un milieu sous pression, un siège de soupape (36, 65), un corps de soupape (2, 42) et un ressort de soupape (5, 44) pour produire une force d'application de siège indépendante de la pression du milieu, et avec une installation (3, 6, 7, 8; 43, 45, 46, 47) qui est en liaison fonctionnelle avec le corps de soupape (2, 42) et qui peut être chargée par la pression du milieu pour produire une force d'application de siège dépendant de la pression du milieu et pour limiter la pression du milieu, **caractérisée en ce que** l'installation présente au moins un corps creux (3, 43) pouvant être chargé par du milieu, qui est déformable élastiquement au sens d'un allongement et présente des moyens (6, 7, 8) pour limiter la pression du milieu.

2. Soupape selon la revendication 1, **caractérisée en ce que** l'installation est disposée à l'intérieur de la cage de soupape (1, 41).

3. Soupape selon l'une des revendications 1 ou 2, **caractérisée en ce que** la cage de soupape (1) présente une partie médiane rigide (12).

4. Soupape selon l'une des revendications 1 à 3, **caractérisée par** au moins une membrane (4) qui relie la cage (1) au corps de soupape (2) et réalise une chambre (35) dans la cage de soupape (1) pouvant être chargée par du milieu.

5. Soupape selon l'une des revendications 1 à 4, **caractérisée en ce que** le corps creux (3, 43) est réalisé en forme de cylindre, et **en ce que** le corps creux (3, 43) est limité, d'une part, par le corps de soupape (2, 42) et, d'autre part, par un organe de fermeture (32, 85).

6. Soupape selon l'une des revendications 1 à 5, **caractérisée en ce que** le corps de soupape (2, 42) forme un siège plan ou conique, et **en ce que** le corps de soupape (2, 42) présente un perçage axial (30, 76) pour charger le corps creux (3, 43) en milieu.

7. Soupape selon l'une des revendications 1 à 6, **caractérisée en ce que** le corps creux (3) présente un tube (31) à paroi mince qui est déformable élastiquement.

8. Soupape selon l'une des revendications 1 à 7, **caractérisée en ce que** la paroi du tube (31) et la paroi de la partie médiane (12) ont sensiblement la même longueur.

9. Soupape selon l'une des revendications 1 à 5, **caractérisée en ce que** le corps creux (43) est réalisé en plusieurs parties.

10. Soupape selon l'une des revendications 1 à 9, **caractérisée en ce que** le corps creux (3, 43) présente une première chambre (76, 89) qui est en liaison avec l'ouverture d'admission (15).

11. Soupape selon la revendication 10, **caractérisée en ce que** la première chambre est remplie d'un milieu qui diffère du milieu à décharger.

12. Soupape selon l'une des revendications 1 à 11, **caractérisée par** une deuxième chambre pour la réception d'un milieu pour la transmission de la chaleur.

13. Soupape selon l'une des revendications 1 à 12, **caractérisée par** une soupape de retenue (48) qui est disposée au voisinage de l'entrée du milieu.

14. Agencement de commande de la pression du milieu avec une soupape de sécurité selon l'une des revendications 1 à 11, **caractérisé en ce que** l'agencement est une installation d'injection ou analogue.

15. Moteur à combustion interne avec une soupape de sécurité selon l'une des revendications 1 à 14.
